# EUROPÄISCHE PATENTSCHRIFT

(11) **EP 1 020 275 B1**
(45) Veröffentlichungstag und Bekanntmachung des Hinweises auf die Patenterteilung: **16.10.2002**
(21) Anmeldenummer: 99125981.3
(22) Anmeldetag: 28.12.1999
(51) Int. Cl.: B29C 44/46

(54) **Vorrichtung zum Herstellen von Schaumstoff aus einem gelöstes Treibmittel enthaltenden Reaktionsgemisch**
Device for making foam from a reactive mixture containing a dissolved foaming agent
Dispositif pour la production de mousse à partir d'un mélange réactif contenant un agent moussant dissous

(30) Priorität: 12.01.1999 DE 19900822
(43) Veröffentlichungstag der Anmeldung: 19.07.2000
(73) Patentinhaber: Hennecke GmbH, 51379 Leverkusen (DE)
(72) Erfinder: Sulzbach, Hans-Michael, 53639 Königswinter (DE); Raffel, Reiner, 53721 Siegburg (DE); Thiebes, Florian, 53639 Königswinter (DE)
(74) Vertreter: Feldhues, Michael L.F., Dr.

(56) Entgegenhaltungen:
- DE-A- 19 620 991
- DE-C- 4 422 568
- US-A- 3 343 214

## Beschreibung

Die Erfindung betrifft eine Vorrichtung zum Herstellen von Schaumstoff aus einem gelöstes Treibmitel enthaltenden Reaktionsgemisch aus fließfähigen Reaktionskomponenten, bestehend aus einer Mischkammer mit einer Auslassöffnung und mit Zuleitungen für die Reaktionskomponenten, wobei mindestens eine der Zuleitungen ein Organ zum Beladen mit und zum Lösen von Treibmittel aufweist, und wobei an die Auslassöffnung ein Entspannungsorgan (Creamer) anschließt (DE 44 22 568 C1).

Bei der Schaumstoffherstellung, insbesondere bei der Polyurethan-Schaumstoffherstellung aus Isocyanat und Polyol, hat das gelöste Treibmittel die Aufgabe, beim Austritt aus dem Creamer durch Entspannung in den gasförmigen Zustand überzugehen, sich an die gebildeten Nukleationskeime anzulagern, und im Schaumstoff Poren zu bilden.

Als Treibmittel eignen sich u.a. die aus Umweltschutzgründen nicht mehr gebräuchlichen Fluorkohlenwasserstoffe, Pentan und neuerdings insbesondere Kohlendioxid.

Für die Erzeugung eines Schaumstoffes mit homogener Rohdichte ist es notwendig, dafür zu sorgen, dass sich einerseits vor der Entspannung des Reaktionsgemisches genügend und gleichmäßig verteilte Nukleationskeime bilden und dass sich andererseits das gesamte Treibmittel erst nach Verlassen des Creamers entspannt und sich beim Übergang in den gasförmigen Zustand durch Anlagerung an die bereits gebildeten Nukleationskeime gleichmäßig im Schaumstoff verteilte Poren gleichmäßiger Größe bilden.

In dem der Mischkammer nachgeordneten Creamer wird deshalb mit mindestens einer als Drosselorgan dienenden Loch- oder Siebplatte der Strom des Reaktionsgemisches gedrosselt und dadurch für die Aufrechterhaltung des notwendigen Druckes gesorgt, damit der Lösungszustand des Treibmittels erhalten bleibt. Diese mindestens eine Siebplatte ist beispielsweise zu 10 % offen und weist ca. 1270 Löcher pro cm² mit einem Durchmesser von 0,1 mm auf. Es handelt sich um sehr feine Loch- bzw. Siebplatten, wobei die Lochzahl pro cm² und die Anzahl der Siebplatten u.a. von dem aufrechtzuerhaltenden Druck abhängig sind.

Um einen optimalen Schaumstoff zu erzielen, hat man schon vorgeschlagen, mit von außerhalb des Creamers verstellbaren und damit einseitig gehaltenen Blenden bei Beginn des Schäumprozessses die Größe der aktiven Lochplattenfläche entsprechend einzustellen (DE 195 24 434 A1). Da die Blenden aber an einer schräg geführten Halterung angeordnet sind, sind sie instabil; und da je nach Einstellung unterschiedlich große Flächen der Loch- oder Siebplatte abgedeckt sind, ist die Strömung wegen des sich ändernden Querschnittes des Strömungskanals bzw. wegen des sich ändernden Strömungsweges inhomogen.

Es ist auch schon versucht worden, die Einstellung mittels eines Spaltes mit einstellbarer Höhe vorzunehmen (DE 195 24 434 A1). Dabei ist der in seiner Höhe verstellbare Spalt zwischen zwei kompakten, sich konisch erweiternden Flächen oder zwischen einer kompakten Fläche und einer Loch- oder Siebplatte angeordnet. Auch hier hat sich gezeigt, dass sich mit der Verstellung der Spalthöhe nicht nur in gewünschter Weise der Druck, sondern auch in unerwünschter Weise die Strömungsverhältnisse ändern. Dadurch verändert sich aber auch die Bildung der Nukleationskeime nachteilig, und eine gleichmäßige Porenbildung ist nicht gewährleistet.

Schließlich hat man bereits vorgeschlagen, einem sich konisch erweiternden Spalt ein Beruhigungsorgan in Form eines Beruhigungssiebes nachzuordnen (EP 0719 627 A2). Auch hier ist keine Ausbildung einer homogenen Strömung gewährleistet, denn der Zustrom des Reaktionsgemisches aus dem Spalt erfolgt im Wesentlichen parallel zu dem Beruhigungssieb, wodurch ein breites Verweilzeitspektrum vorhanden ist und eine nochmalige rechtwinklige Umlenkung zum Durchtritt durch das Beruhigungssieb erfolgen muss, wodurch die entstehende Verwirbelung die unerwünschte Breite des Verweilzeitspektrums auch noch ungünstig unterstützt.

Obwohl die Technik schwierig zu beherrschen ist, benutzt man heute als Treibmittel bei der Polyurethan-Schaumstoffherstellung insbesondere Kohlendioxid. Dies gilt sowohl für die Formverschäumung, aber insbesondere auch für kontinuierliche Herstellungsverfahren, wie Blockschaumstoff-Fertigung, Plattenherstellung auf einem Doppeltransportband, sowie bei der Textilbeschichtung. Da bei der Entspannung das Kohlendioxid schlagartig in den gasförmigen Zustand übergeht, ist die Störanfälligkeit hierbei besonders hoch und die Erzielung einwandfreier Schaumstoffqualität schwierig.

Ist die Anlage für gleichbleibende Produktionsbedingungen konzipiert, erhält man meist einen Schaumstoff zufriedenstellender Qualität. Gleichbleibende Produktionsbedingungen über längere Zeit sind aber wegen der hohen Durchsätze und der unterschiedlichsten Kundenwünsche selten.

Beispielweise bei der kontinuierlichen Herstellung von Polyurethan-Blockschaumstoffen ist es notwendig, verschiedene Schaumstoffarten mit unterschiedlicher Rohdichte herzustellen. Um dies zu erreichen, muss der Treibmittelanteil verändert werden. Dementsprechend muss der Creamer durch den Einbau weiterer bzw. durch den Wechsel von im Strömungskanal angeordneten Sieb- bzw. Lochplatten gegen solche mit anderer Durchlassfläche bzw. Durchlässigkeit den neuen Produktionsbedingungen angepasst werden. Dies hat natürlich den Nachteil, dass die Produktion zum Austausch der Sieb- oder Lochplatten für eine gewisse Zeit unterbrochen werden muss. Wenn man bedenkt, dass moderne Blockschäumanlagen mit einer Fertigungsgeschwindigkeit etwa 5 m/min arbeiten, liegt der hohe zeitliche Fertigungsausfall auf der Hand. Hinzu kommt, dass beim Wiederanfahren der Blockschäumanlage die ersten gefertigten Meter an Blockschaum Ausschuss sind. Eine Feinjustierung zum Optimieren der Verarbeitung des Reaktionsgemisches zu Beginn der Fertigung ist mit fest eingebauten Loch- bzw. Siebplatten ebenfalls nicht möglich.

Bei der Formverschäumung, bei welcher wegen der taktweisen Fertigung naturgemäß mit kurzen Unterbrechungen während des Betriebes gearbeitet wird, ist häufig ebenfalls kurzfristig eine Änderung der Produktionsbedingungen vorzunehmen. Erforderlichenfalls muss der Creamer bei Änderung der Produktionsbedingungen gespült werden.

Eine Änderung der Produktionsbedingungen beruht meist auf einer Änderung des Treibmittelanteils des Reaktionsgemisches, auf einer Änderung des Durchsatzes, und/oder auf einer Änderung des Volumenverhältnisses der Reaktionskomponenten zueinander.

Häufig ist die erwähnte Feinjustierung zum Erzielen optimaler Schaumstoffe nicht nur zum Fertigungsbeginn erforderlich, sondern es ist auch oft eine Nachjustierung während des Betriebes wünschenswert.

Es besteht somit die Aufgabe, eine verbesserte Vorrichtung zum Herstellen optimaler Schaumstoffe mit gleichmäßiger Poren- bzw. Blasengröße aus gelöstes Treibmittel enthaltenden Reaktionsgemischen zu schaffen, welche sich auch während der Produktion einstellen bzw. auf veränderte Produktionsbedingungen einstellen lässt.

Diese Aufgabe wird dadurch gelöst, dass in diesem Entspannungsorgan (Creamer) quer zur Strömungsrichtung mindestens zwei als Drosselplatten ausgebildete Loch- bzw. Siebplatten angeordnet sind, wobei der Abstand a zwischen diesen beiden Drosselplatten während des Betriebes veränderbar ist, und dass in Strömungsrichtung nach der zweiten Drosselplatte ein Beruhigungsorgan angeordnet ist.

Dadurch wird erreicht, dass bei Veränderung der Produktionsbedingungen bzw. beim Feinjustieren durch Verändern bzw. Anpassen des Abstandes a zwischen den beiden Loch- bzw. Siebplatten ein homogenes Strömungsfeld und eine geringe Verweilzeit aufrechterhalten werden, wodurch auch weiterhin fiir eine gleichmäßige Bildung von Nukleationskeimen gesorgt wird, und wodurch ein vorzeitiger Übergang von Treibmittel in den gasförmigen Zustand vermieden wird.

Wird während des Betriebes der Treibmittelanteil erhöht, so muss der Mischkammerdruck vergrößert und der Abstand a entsprechend verkleinert werden. Wird die Durchsatzmenge an Reaktionsgemisch erhöht, so muss der Abstand a vergrößert werden, um den Mischkammerdruck bei gleichbleibendem Treibmittelanteil konstant zu halten. Wird das Mengenverhältnis des Polyolanteils zum Isocyanatanteil verändert, so muss eine eventuelle Anpassung des Abstandes a empirisch ermittelt werden. Wie groß die Veränderung des Abstandes a sein muss, ergibt sich aus auf Erfahrungswerten beruhenden Tabellen bzw. Diagrammen.

Unter dem Begriff "während des Betriebes" ist zu verstehen, dass der Eingriff bei kontinuierlicher Fertigung während der laufenden Anlage erfolgt; bei der Formverschäumung erfolgt er in der Regel in den kurzen Pausenzeiten zwischen zwei Formfüllungen.

Wichtig ist dabei, dass das mit Treibmittel beladene Reaktionsgemisch unmittelbar nach dem im Wesentlichen homogenen Ausströmen aus der letzten Drosselplatte durch ein Beruhigungsorgan nochmals beruhigt wird. Aus EP 0 719 627 A2 ist es zwar bekannt, hinter einem Spalt ein Beruhigungssieb vorzusehen. Hier wird aber das aus dem Spalt austretende Reaktionsgemisch umgelenkt, bevor es unter nochmaliger Umlenkung durch das Beruhigungssieb strömt. Die dabei vor dem Beruhigungssieb auftretende Verwirbelung verursacht ein ungünstiges Verweilzeitspektrum, so dass sowohl eine unregelmäßige Bildung von Nukleationskeimen als auch ein unerwünschter vorzeitiger Übergang von Treibmittel in den gasförmigen Zustand stattfindet, wodurch sich ungleichmäßig große Poren bzw. Blasen beim Entstehen des Schaumstoffes bilden. Bei der neuen Lösung hingegen besteht bereits vor dem Beruhigungssieb eine lineare Strömung, so dass, über den Strömungsquerschnitt gesehen, hier eine außerordentlich geringe und gleichlange Verweilzeit vorhanden ist. Die Poren- bzw. Blasenbildung setzt bei der neuen Lösung auch in ihren Anfängen erst nach Passieren des Beruhigungsorgans ein, so dass alle Voraussetzungen für die Erzeugung eines homogenen Schaumstoffes geschaffen sind.

Die eigentliche Entspannung erfolgt erst hinter dem Beruhigungsorgan, und zwar erhöht sich hier das Volumen des Reaktionsgemisches durch Anlagerung des Treibmittels an die Nukleationskeime und den sofortigen Übergang des Treibmittels in den gasförmigen Zustand schlagartig. Beispielsweise bei Kohlendioxid als Treibmittel treibt das Reaktionsgemisch auf etwa das zehnfache Volumen auf. Die Anlagerung an die Nukleationskeime erfolgt dabei sehr gleichmäßig, so dass ein homogener Schaumstoff mit gleichmäßiger Poren- bzw. Blasengröße und -verteilung entsteht.

Erst mit dieser neuen Kombination der Vorrichtungsmerkmale lässt sich eine wirkungsvolle Feinjustierung durchführen; und durch die Veränderbarkeit des besagten Abstandes der beiden Drosselplatten voneinander lässt sich die Vorrichtung während des Betriebes, also ohne Unterbrechung der Produktion, auf veränderte Produktionsbedingungen einstellen. Somit sind beispielsweise die Voraussetzungen für die unmittelbar aufeinanderfolgende Herstellung von Schaumstoffen mit unterschiedlicher Rohdichte ohne Unterbrechung der laufenden Produktion der Anlage und ohne größere Verluste durch Ausschuss gegeben.

Gemäß einer ersten vorteilhaften Ausführungsform besteht das Entspannungsorgan aus einem ersten Gehäuseteil und einem zweiten Gehäuseteil, wobei die in Strömungsrichtung erste Drosselplatte mit dem ersten Gehäuseteil fest verbunden ist, während im zweiten Gehäuseteil die zweite Drosselplatte und das Beruhigungsorgan fest angeordnet sind, wobei der Abstand a zwischen diesen beiden Drosselplatten durch Verstellen der beiden gegeneinander abgedichteten Gehäuseteile gegeneinander veränderbar ist.

Die beiden Gehäuseteile sind über eine nicht näher beschriebene Einstellvorrichtung gegeneinander verstellbar. Für Einstellvorrichtungen bietet die Technik für vergleichbare Aufgaben genügend Vorbilder. Es versteht sich von selbst, dass zwischen den beiden Gehäuseteilen eine druckdichte Gleitdichtung vorhanden sein muss. Je nach Konstruktion lässt sich das eine oder andere Gehäuseteil verstellen. Vorteilhaft ist eine Verstellbarkeit des zweiten Gehäuseteils, weil dann der Abstand des Creamers bzw. der ersten Drosselplatte im ersten Gehäuseteil von der Mischkammer stets unverändert bleibt bzw. eine Bewegung des ersten Gehäuseteils, gegebenenfalls samt Mischkammer, vermieden wird.

Gemäß einer zweiten vorteilhaften Ausführungsform ist im Entspannungsorgan die in Strömungsrichtung erste Drosselplatte verstellbar angeordnet, während die zweite Drosselplatte sowie das Beruhigungsorgan starr darin angeordnet sind, wobei der Abstand a zwischen diesen beiden Drosselplatten durch Verstellen der ersten Drosselplatte veränderbar ist.

Auch hier bedarf es einer nicht näher beschriebenen Verstellvorrichtung fiir die vorzugsweise mit einem geführten Schaft versehene Drosselplatte. Hierbei ist von Vorteil, dass die erste Drosselplatte bei der Montage vom Ende her in das Entspannungsorgan eingeführt und befestigt werden kann. Oder man verwendet zwei gegeneinander abdichtbare, starr verbindbare Gehäuseteile. In beiden Fällen bestehen keine besonderen Abdichtungsschwierigkeiten.

Man muss darauf achten, dass die Drosselplatten so dimensioniert bzw. ausgeführt sind, dass die durch die Druckbeanspruchung hervorgerufene Verformung wesentlich kleiner ist als der Spaltabstand a, um eine homogene Durchströmung sicherzustellen.

Beispielsweise besitzt die erste Drosselplatte zwischen ihren größeren Löchern ausgangsseitig kegelige Spitzen, welche in die darunterliegenden, entsprechend angeschrägten Löcher der zweiten Drosselplatte hinweisen, so dass dazwischen eine Vielzahl von gleichartigen Spalten vorhanden ist. Beim Verändern des Abstandes zwischen diesen beiden Drosselplatten werden alle Spalte gleichzeitig und in ihrer Höhe gleichmäßig verändert.

Vorzugsweise besteht das Beruhigungsorgan aus mindestens einer Siebplatte.

Alternativ hierzu besteht das Beruhigungsorgan aus einer Sintermetallplatte.

Gemäß einer weiteren besonderen Ausführungsform ist zwischen der zweiten Drosselplatte und dem Beruhigungsorgan mindestens eine weitere Drosselplatte angeordnet.

Dadurch wird erreicht, dass nacheinander Drosselplatten unterschiedlicher Durchlässigkeit angeordnet werden können, so dass die Androsselung hinter der ersten Drosselplatte bis zum gewünschten Maximalwert in mehreren Stufen erfolgen kann.

Gemäß einer weiteren besonderen Ausführungsform ist in Strömungsrichtung vor der ersten Drosselplatte mindestens eine Sieb- bzw. Sintermetallplatte angeordnet.

Die Anordnung mindestens einer solchen Sieb- bzw. Lochplatte und/oder mindestens einer Sintermetallplatte vor der ersten Drosselplatte dient der Homogenisierung der Strömung und fängt Verunreinigungen ab.

In der Zeichnung ist die neue Vorrichtung am Beispiel einer kontinuierlich arbeitenden Blockschäumanlage in zwei Ausführungsbeispielen rein schematisch dargestellt. Es zeigen:
- Fig. 1: eine Blockschäumanlage mit dem Creamer in der Seitenansicht,
- Fig. 2: ein erstes Ausführungsbeispiel des Creamers in vergrößerter Darstellung im Schnitt und
- Fig.3: ein zweites Ausführungsbeispiel des Creamers in vergrößerter Darstellung im Schnitt.

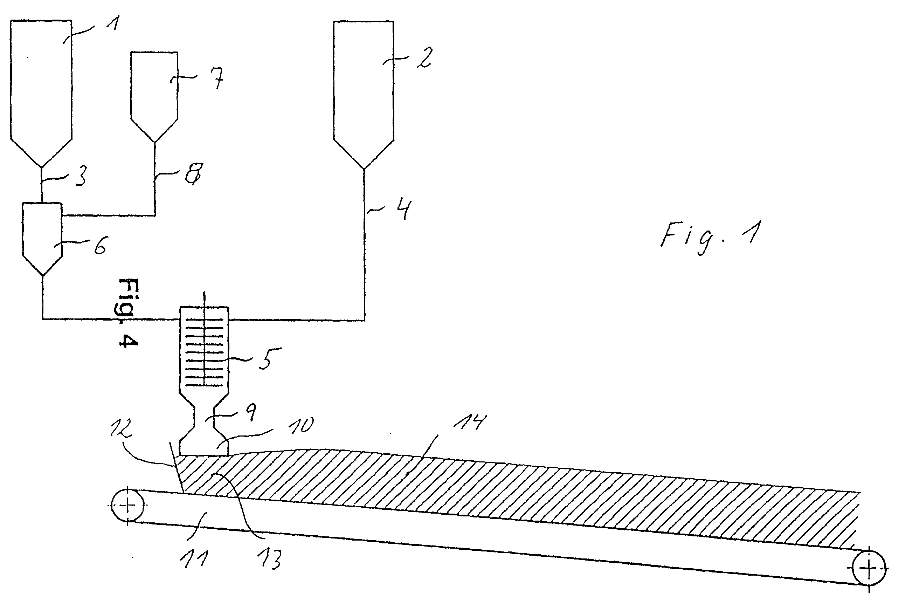

In Fig. 1 besteht die Bockschäumanlage aus Vorratsbehältern 1, 2 für Polyol und Isocyanat. Zuleitungen 3, 4 führen von den Vorratsbehältern 1, 2 in eine Mischkammer 5. Dabei ist in der Zuleitung 3 für Polyol ein Druckmischorgan 6 angeordnet, in welches eine von einem Treibmittelbehälter 7 für Kohlendioxid abführende Zuleitung 8 einmündet. Hinter der Auslassöffnung 9 der Mischkammer 5 ist ein Entspannungsgehäuse 10, ein Creamer, angeordnet. Dieser öffnet auf ein Transportband 11. Eine Rückflusssperre 12 sorgt dafür, dass das aus dem Creamer 10 austretende und aufschäumende Reaktionsgemisch 13 nicht gegen die Transportrichtung des Transportbandes 11 fließen kann. Durch die Entspannung des Reaktionsgemisches 13 beim Austritt aus dem Creamer 10 treibt das schlagartig in den Gaszustand übergehende Kohlendioxid dieses Reaktionsgemisch 13 zum kontinuierlich abtransportierten Schaumstoffblock 14 auf.

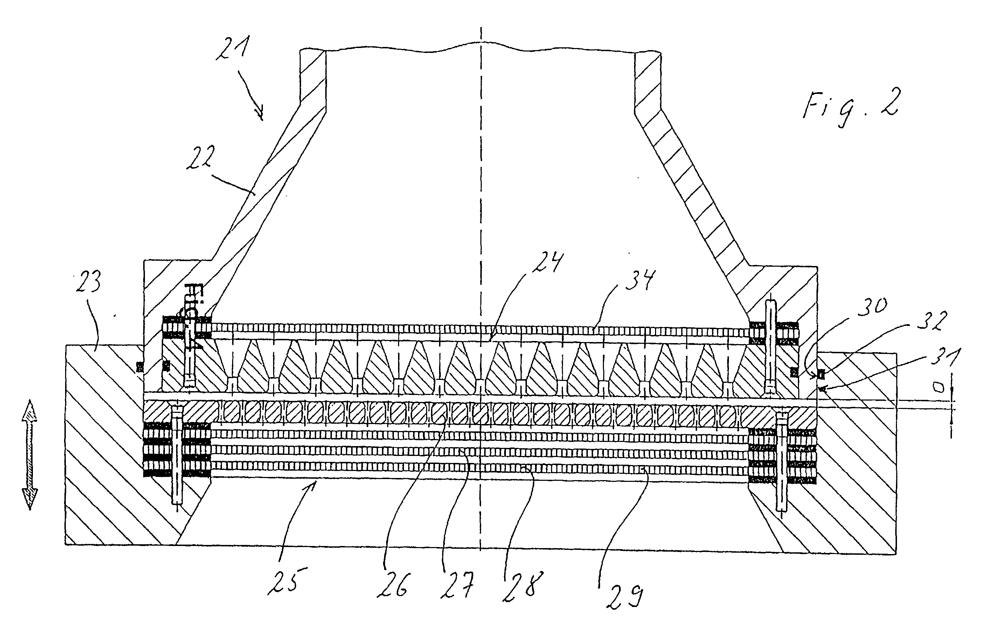

In Fig. 2 besteht der Creamer 21 aus einem Gehäuseteil 22 und einem Gehäuseteil 23. Das Gehäuseteil 22 schließt an die Auslassöffnung 9 (Fig. 1) der Mischkammer 5 (Fig. 1) an, und in ihr ist quer zur Strömungsrichtung eine aus einer Lochplatte bzw. aus einer Siebplatte bestehende Drosselplatte 24 fest, aber austauschbar angeordnet. Ihre aktive Fläche ist zu 9 % durchlässig. An das Gehäuseteil 22 schließt das dagegen abstandsmäßig verstellbare Gehäuseteil 23 abdichtend an. Die Verstellvorrichtung ist nur als Pfeil angedeutet. Es versteht sich, dass sie eine sehr feine und genaue Einstellbarkeit ermöglichen muss. Das Gehäuseteil 23 enthält parallel zur Drosselplatte 24 ein Paket 25 aus drei Loch- bzw. Siebplatten 26, 27, 28, deren aktive Flächen zu 5 %, 3 % und 2 % durchlässig sind, sowie ein als Sieb oder Sintermetallelement ausgebildetes Beruhigungsorgan 29. Alle Platten sind sehr dünn und deshalb empfindlich gegen Druck. Eine (nicht dargestellte) Abstützung ist gegebenenfalls erforderlich. Der Rand 30 des Gehäuseteils 23 umgibt den Rand 31 des Gehäuseteils 22, wobei zwischen den Rändern 30, 31 eine druckfeste Gleitringdichtung 32 angeordnet ist. Dadurch ist die Verstellbarkeit gegeneinander gewährleistet, und zwischen der Drosselplatte 24 und der Siebplatte 26 besteht ein den veränderbaren Abstand a bildender Spalt 33. Im ersten Gehäuseteil 22 ist vor der ersten Drosselplatte 24 eine Siebplatte 34 fix angeordnet. Sie besitzt eine durchlässige Fläche von 20 % bei einer Lochgröße von 0,1 mm Durchmesser und einer Lochzahl von ca. 2 550 pro cm².

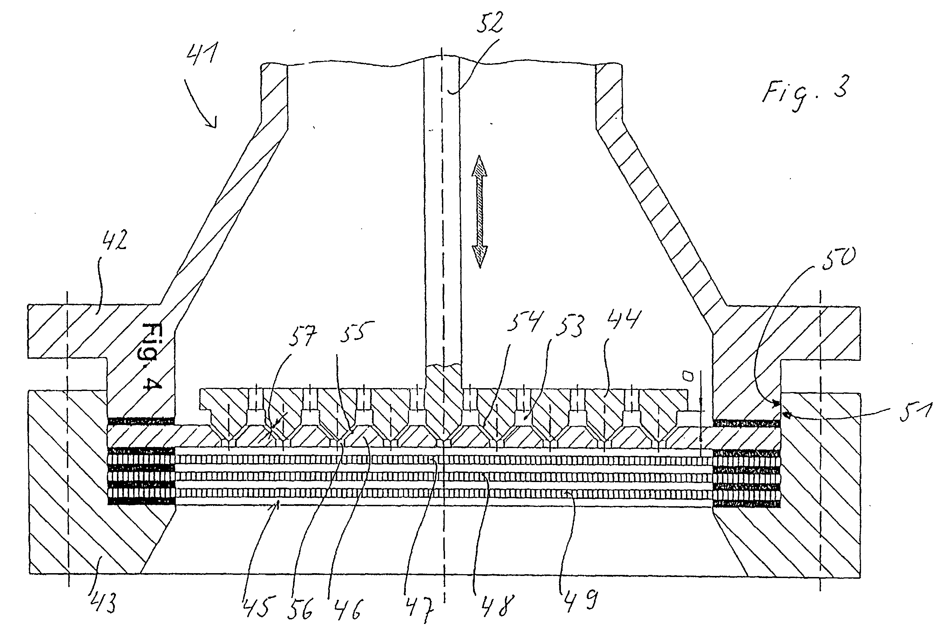

In Fig. 3 besteht der Creamer 41 aus einem Gehäuseteil 42 und einem damit starr verbundenen Gehäuseteil 43. Das Gehäuseteil 42 schließt an die Auslassöffnung 9 (Fig. 1) der Mischkammer 5 (Fig. 1) an und in ihr ist quer zur Strömungsrichtung eine aus einer Lochplatte bestehende erste Drosselplatte 44 mit Schaft 52 mittels einer nicht dargestellten und nur als Pfeil symbolisierten Verstellvorrichtung in Strömungsrichtung verstellbar bzw. feineinstellbar angeordnet. Das Gehäuseteil 43 enthält parallel zur Drosselplatte 44 ein fest verschraubtes Paket 45 aus als Drosselplatten 46, 47, 48 ausgebildete Loch- bzw. Siebplatten und einem als Sieb oder Sintermetallelement ausgebildeten Beruhigungsorgan 49. Alle Platten sind sehr dünn und deshalb empfindlich. Der Rand 50 des Gehäuseteils 43 umgibt den Rand 51 des Gehäuseteils 42 absolut dicht. In diesem Falle weist die verstellbare Drosselplatte 44 sich konisch verjüngende Löcher 53 auf, wobei auf ihrer der Lochplatte 46 zugewandten Seite zwischen diesen Löchern 53 kegelige Spitzen 54 angeordnet sind, welche in die sich entsprechend den kegeligen Spitzen 54 eingangsseitig Verjüngungen 55 aufweisende Löcher 56 der Loch- bzw. Siebplatte 46 hineinweisen, wodurch eine Vielzahl von Durchströmspalten 57 gebildet ist, deren Höhe sich gleichzeitig mit der Veränderung des Abstandes a zwischen der Drosselplatte 44 und der Lochoder Siebplatte 46 bzw. dem Paket 45 verändern lässt.

### Arbeitsbeispiel:

Verwendet wird eine kontinuierlich arbeitende Blockschäumanlage gemäß Fig. 1, 2 mit einer Arbeitsbreite von 2,1 m. Es wird zunächst ein Schaumstoff mit einer Rohdichte von 18 kg/m³ erzeugt.

Aus den Vorratsbehältern 1,2 werden 60 l/min Isocyanat und 100 l/min Polyol gefördert. In dem Druckmischorgan 6 werden im Polyol 2 kg/min Kohlendioxid unter einem Druck von 40 bar gelöst. Diese Reaktionskomponenten werden in die mit einem Stachelrührer ausgestattete Mischkammer 5 von 1 800 cm³ Volumen gefördert. Darin herrscht ein Druck von 6 bar. Das erzeugte Reaktionsgemisch 13 gelangt durch die Auslassöffnung 9 in den anschließenden Creamer 10 und durchströmt die Siebplatte 34. Die im Gehäuseteil 22 fest verschraubte Siebplatte 24 besitzt eine Durchlässigkeit von ca. 9 % ihrer aktiven Fläche bei einer Lochgröße von 2 mm Durchmesser und einer Lochzahl von etwa 3 pro cm², und sie besitzt die Funktion einer Drosselplatte. Parallel dazu ist im zweiten Gehäuseteil 23 eine Siebplatte 26 angeordnet, welche eine Durchlässigkeit ihrer aktiven Fläche von ca. 4,5 % aufweist. Die Lochgröße beträgt 1 mm Durchmesser bei einer Lochzahl von ca. 6 pro cm². Der veränderbare Abstand a zwischen der Drosselplatte 24 und der Siebplatte 26 beträgt 0,3 mm. Der Siebplatte 26 ist in einem Abstand von 0,5 mm ein Beruhigungssieb 29 nachgeordnet. Es besitzt eine Durchlässigkeit seiner aktiven Siebfläche von 10 %. Die Lochgröße beträgt 0,1 mm Durchmesser bei ca. 1 270 Löchern pro cm². Alle Siebplatten sind quer zur Strömungsrichtung und parallel zueinander angeordnet. Die Strömung ist deshalb zwischen allen Siebplatten homogen und die Verweilzeit ist überall optimal kurz. Beim Austritt aus dem Creamer 10 entspannt sich das Reaktionsgemisch 13 schlagartig, das Kohlendioxid geht in gasförmigen Zustand über und treibt dabei das Reaktionsgemisch 13 auf das ca. zehnfache Volumen auf, und zwar auf ca. 1,5 m³/min. Die Rückflusssperre 12 verhindert, dass das aufschäumende Reaktionsgemisch 13 sich in die Gegenrichtung ausbreitet. Der sich bildende Schaumstoffblock 14 wird mit einer Geschwindigkeit des Transportbandes von 4 m/min abtransportiert. Der Schaumstoffblock erreicht eine Höhe von ca. 1,1 m.

Während der Produktion werden nun die Produktionsbedingungen geändert, da jetzt ein Schaumstoff mit einer Rohdichte von 16 kg/min erzeugt werden soll. Nicht besonders erwähnte Parameter bleiben unverändert.

Es wird die Beladung mit Kohlendioxid geändert, indem jetzt 4 kg/min Kohlendioxid im Polyol gelöst werden. Der Creamer 10 wird diesen neuen Bedingungen angepasst, indem durch Verstellen der Gehäuseteile 22 und 23 gegeneinander der Abstand a zwischen den Siebplatten auf 0,15 mm verändert wird. Dadurch wird eine optimale Schaumstoffherstellung aufrechterhalten.

## Patentansprüche

1. Vorrichtung zum Herstellen von Schaumstoffen aus gelöstes Treibmittel enthaltenden Reaktionsgemischen (13) aus fließfähigen Reaktionskomponenten, bestehend aus einer Mischkammer (5) mit einer Auslassöffnung (9) und mit Zuleitungen (3, 4) für die Reaktionskomponenten, wobei mindestens eine der Zuleitungen (3) ein Organ (6) zum Beladen mit und Lösen von Treibmittel aufweist, und wobei an die Auslassöffnung (9) ein Entspannungsorgan (10) anschließt, **dadurch gekennzeichnet, dass** in diesem Entspannungsorgan (10) quer zur Strömungsrichtung zwei als Drosselplatten ausgebildete Loch- bzw. Siebplatten (24, 26; 44, 46) angeordnet sind, wobei der Abstand a zwischen diesen beiden Drosselplatten (24, 26; 44, 46) während des Betriebes veränderbar ist, und dass in Strömungsrichtung nach der zweiten Drosselplatte (26; 46) ein Beruhigungsorgan (29; 49) angeordnet ist.

2. Vorrichtung nach Anspruch 1, **dadurch gekennzeichnet, dass** das Entspannungsorgan (10) aus einem ersten Gehäuseteil (22) und einem zweiten Gehäuseteil (23) besteht, wobei die in Strömungsrichtung erste Drosselplatte (24) fest mit dem ersten Gehäuseteil (22) verbunden ist, während im zweiten Gehäuseteil (23) die zweite Drosselplatte (26) und das Beruhigungsorgan (29) fest angeordnet sind, wobei der Abstand a zwischen diesen beiden Drosselplatten (24, 26) durch Verstellen der beiden gegeneinander abgedichteten Gehäuseteile (22, 23) gegeneinander veränderbar ist.

3. Vorrichtung nach Anspruch 1, **dadurch gekennzeichnet, dass** im Entspannungsorgan (10) die in Strömungsrichtung erste Drosselplatte (44) verstellbar angeordnet ist, während die zweite Drosselplatte (46) sowie das Beruhigungsorgan (49) darin starr angeordnet sind, und dass der Abstand a zwischen den beiden Drosselplatten (44, 46) durch Verstellen der ersten Drosselplatte (44) veränderbar ist.

4. Vorrichtung nach einem der Ansprüche 1, 2 oder 3, **dadurch gekennzeichnet, dass** das Beruhigungsorgan (29; 49) aus mindestens einer Siebplatte besteht.

5. Vorrichtung nach einem der Ansprüche 1 bis 4, **dadurch gekennzeichnet, dass** das Beruhigungsorgan (29; 49) aus mindestens einer Sintermetallplatte besteht.

6. Vorrichtung nach einem der Ansprüche 1 bis 5, **dadurch gekennzeichnet, dass** zwischen der zweiten Drosselplatte (26; 46) und dem Beruhigungsorgan (29, 49) mindestens eine weitere Drosselplatte (27, 28; 47, 48) angeordnet ist.

7. Vorrichtung nach einem der Ansprüche 1 bis 6, **dadurch gekennzeichnet, dass** in Strömungsrichtung vor der ersten Drossselplatte (22) mindestens eine Sieb- bzw. Sinterplatte (34) angeordnet ist.

## Claims

1. An apparatus for the production of foamed materials from reaction mixtures (13) of free-flowing reaction components which contain a dissolved foaming agent, consisting of a mixing chamber (5) having an outlet opening (9) and having feed lines (3, 4) for the reaction components, wherein at least one of the feed lines (3) comprises an element (6) for the introduction and dissolution of foaming agent, and wherein a depressurisation element (10) adjoins the outlet opening (9), **characterised in that** two perforated plates or sieve plates (24, 26; 44, 46), which are constructed as throttle plates, are disposed transversely to the direction of flow in said depressurisation element (10), wherein the spacing a between said two throttle plates (24, 26; 44, 46) can be varied during operation, and that a calming element (29; 49) is disposed after the second throttle plate (26; 46) in the direction of flow.

2. An apparatus according to claim 1, **characterised in that** the depressurisation element (10) consists of a first housing part (22) and a second housing part (23), wherein the first throttle plate (24) in the direction of flow is fixedly attached to the first housing part (22), whilst the second throttle plate (26) and the calming element (29) are fixedly disposed in the second housing part (23), and wherein the spacing a between said two throttle plates (24, 26) can be varied by adjusting the two mutually sealed housing parts (22, 23) in relation to each other.

3. An apparatus according to claim 1, **characterised in that** the first throttle plate (44) in the direction of flow is adjustably disposed in the depressurisation element (10), whilst the second throttle plate (46) and the calming element (49) are rigidly disposed therein, and that the spacing a between the two throttle plates (44, 46) can be varied by adjusting the first throttle plate (44).

4. An apparatus according to any one of claims 1, 2 or 3, **characterised in that** the calming element (29; 49) consists of at least one sieve plate.

5. An apparatus according to any one of claims 1 to 4, **characterised in that** the calming element (29; 49) consists of at least one sintered metal plate.

6. An apparatus according to any one of claims 1 to 5, **characterised in that** at least one further throttle plate (27, 28; 47, 48) is disposed between the second throttle plate (26; 46) and the calming element (29, 49).

7. An apparatus according to any one of claims 1 to 6, **characterised in that** at least one sieve plate or sintered plate (34) is disposed in front of the first throttle plate (22) in the direction of flow.

## Revendications

1. Dispositif pour la préparation de mousses à partir de mélanges réactionnels (13) de constituants réactionnels fluides, contenant un agent moussant dissous, constitué d'une chambre de mélange (5) avec une ouverture d'évacuation (9) et des canalisations (3, 4) pour les constituants réactionnels, au moins une des canalisations (3) présentant un organe (6) pour la charge et la dissolution d'agent moussant, et un organe de détente (10) étant raccordé à l'ouverture d'évacuation (9), **caractérisé en ce que** deux plaques perforées respectivement à trous (24, 26 ; 44, 46) conçues comme des plaques d'étranglement sont disposées dans cet organe de détente (10) perpendiculairement à la direction de l'écoulement, la distance a entre ces deux plaques d'étranglement (24, 26 ; 44, 46) pendant le fonctionnement pouvant être modifiée, et **en ce qu'**un organe de repos (29 ; 49) est disposé dans la direction d'écoulement après les deux plaques d'étranglement (26 ; 46).

2. Dispositif selon la revendication 1, **caractérisé en ce que** l'organe de détente (10) est constitué d'une première partie de boîtier (22) et d'une seconde partie de boîtier (23), la première plaque d'étranglement dans la direction de l'écoulement (24) étant liée de manière fixe à la première partie de boîtier (22) alors que la seconde plaque d'étranglement (26) et l'organe de repos (29) sont disposés de manière fixe dans la seconde partie de boîtier (23), la distance a entre ces deux plaques d'étranglement (24, 26) pouvant être modifiée par déplacement des deux parties de boîtier (22, 23) étanches l'une par rapport à l'autre.

3. Dispositif selon la revendication 1, **caractérisé en ce que** la première plaque d'étranglement dans la direction de l'écoulement (44) est disposée de manière déplaçable dans l'organe de détente (10) alors que la seconde plaque d'étranglement (46) ainsi que l'organe de repos (49) y sont disposés de manière fixe, et **en ce que** la distance a entre les deux plaques d'étranglement (44, 46) peut être modifiée par déplacement de la première plaque d'étranglement (44).

4. Dispositif selon l'une quelconque des revendications 1, 2 ou 3, **caractérisé en ce que** l'organe de repos (29 ; 49) est constitué d'au moins une plaque à trous.

5. Dispositif selon l'une quelconque des revendications 1 à 4, **caractérisé en ce que** l'organe de repos (29 ; 49) est constitué d'au moins une plaque de métal fritté.

6. Dispositif selon l'une quelconque des revendications 1 à 5, **caractérisé en ce qu'**il est disposé entre les deux plaques d'étranglement (26 ; 46) et l'organe de repos (29, 49) au moins une autre plaque d'étranglement (27, 28 ; 47, 48).

7. Dispositif selon l'une quelconque des revendications 1 à 6, **caractérisé en ce qu'**il est disposé dans la direction de l'écoulement avant la première plaque d'étranglement (22) au moins une plaque à trous respectivement frittée (34).
